(19) Europäisches Patentamt
European Patent Office
Office européen des brevets

(11) **EP 3 843 017 A2**

(12) **EUROPEAN PATENT APPLICATION**

(43) Date of publication:
**30.06.2021 Bulletin 2021/26**

(51) Int Cl.:
**G06N 5/04** *(2006.01)* **G06N 20/00** *(2019.01)*

(21) Application number: **20215206.2**

(22) Date of filing: **17.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **23.12.2019 US 201916725734**

(71) Applicant: **SAP SE**
**69190 Walldorf (DE)**

(72) Inventor: **Sarferaz, Siar**
**69190 Walldorf (DE)**

(74) Representative: **Müller-Boré & Partner**
**Patentanwälte PartG mbB**
**Friedenheimer Brücke 21**
**80639 München (DE)**

(54) **AUTOMATED, PROGRESSIVE EXPLANATIONS OF MACHINE LEARNING RESULTS**

(57) Techniques and solutions are described for analyzing results of a machine learning model. Disclosed technologies provide for progressively providing explanation of machine learning results at increasing levels of granularity. A global or local explanation can be provided for given set of one or more machine learning results. A global explanation can provide information regarding the general performance of the machine learning model. One type of local explanation can include results calculated for considered, but unselected options. Another type of local explanation can include analysis of features used in generating a particular machine learning result. By automatically calculating and providing analysis of machine learning results, users may better understand how results were calculated and the potential accuracy of the results, and may have greater confidence in using machine learning techniques.

FIG. 3

**Description**

**FIELD**

The present disclosure generally relates to interpreting results provided by machine learning models. Particular implementations relate to providing progressively detailed explanations of machine learning results.

**BACKGROUND**

Machine learning is increasingly being used to make, or help make, various decisions, or to otherwise analyze data. Machine learning techniques can be used to analyze data more quickly or accurately that could be performed by a human. In some cases, it can be impracticable for humans to manually analyze a data set. Thus, machine learning has facilitated the rise of "big data," by providing ways that such data can be put to practical use.

However, even for experts in the field, machine learning can be complicated to understand. The situation can be even more complex when machine learning is applied to particular applications in particular fields. That is, a computer scientist may understand the algorithms used in a machine learning technique, but may not understand the subject matter domain well enough to ensure that a model is accurately trained or to properly evaluate results provided by machine learning. Conversely, a domain expert may be well versed in a given subject matter area, but may not understand how the machine learning algorithms work.

Consequently, if users do not understand how a machine learning model works, they may not have confidence in the results provided by machine learning. If users are not confident in the results of machine learning, they may be less likely to use machine learning at all, possibly foregoing advantages that could be gained. Accordingly, room for improvement exists.

**SUMMARY**

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Techniques and solutions are described for analyzing results of a machine learning model. Disclosed technologies provide for progressively providing explanation of machine learning results at increasing levels of granularity. A global or local explanation can be provided for given set of one or more machine learning results. A global explanation can provide information regarding the general performance of the machine learning model. One type of local explanation can include results calculated for considered, but unselected options. Another type of local explanation can include analysis of features used in generating a particular machine learning result. By automatically calculating and providing analysis of machine learning results, users may better understand how results were calculated and the potential accuracy of the results, and may have greater confidence in using machine learning techniques.

A method is provided for displaying an explanation for a machine learning result. A first machine learning result is generated for an input data set that includes a first plurality of features. A first user interface screen is rendered for display. The first user interface screen displays the first machine learning result. First user input is received requesting a first local explanation for the first machine learning result. The first local explanation is calculated, and includes contributions of two or more of the first plurality of features to the first machine learning result. A display is rendered of the first local explanation.

According to another embodiment, another method is provided for displaying an explanation for a machine learning result. A plurality of machine learning results are generated for a plurality of input data sets. A first machine learning result of the plurality of results is selected as a selected result. The plurality of machine learning results are ranked. A user interface display is rendered, displaying the ranked machine learning results and an indication of the selected result.

First user input is received requesting a granular local explanation for a second machine learning result of the plurality of machine learning results, where the second machine learning result can be the first machine learning result. The granular local explanation is calculated. The granular local explanation includes contribution scores for two or more features of a plurality of features used to generate the second machine learning result. The granular local explanation is displayed.

According to an additional aspect, a further example method of displaying an explanation for a machine learning result is provided. A plurality of machine learning results are generated for a plurality of input data sets. Input data sets of the plurality of the input data sets are associated with an object comprising a plurality of features. A given machine learning result of the machine learning results includes at least one result value. The plurality of machine learning results are ranked based at least in part on values of the at least one result type. A user interface display is rendered that displays the ranked machine learning results and respective values for the at least one result type. First user input is received requesting a granular local explanation for a machine learning result of the plurality of machine learning results. The granular local explanation is calculated. The granular local explanation includes contribution scores for two or more features of a plurality of features used to generate the machine learning result. The granular local explanation is displayed.

The present disclosure also includes computing systems and tangible, non-transitory computer readable storage media configured to carry out, or including instructions for carrying out, an above-described method. As described herein, a variety of other features and advantages can be incorporated into the technologies as desired.

## BRIEF DESCRIPTION OF THE DRAWINGS

FIG. 1 is a schematic diagram illustrating how values used as input for a machine learning model, either to train the model or for classification, can be associated with features.

FIG. 2 is a schematic diagram illustrating how values used as input for a machine learning model, either to train the model or for classification, can be associated with features, and how different features can contribute to a result in differing degrees.

FIG. 3 is a matrix illustrating dependency information between features used as input for a machine learning model.

FIG. 4 is a plot illustrating relationships between features used as input for a machine learning model.

FIG. 5 is a diagram schematically illustrating how user interface screens can display increasingly granular levels of machine learning explanation information.

FIGS. 6A-6D are example user interface screens presenting machine learning explanation information at various levels of granular detail.

FIG. 7 is timing diagram illustrating a process for generating machine learning explanation information.

FIGS. 8 and 9 are diagrams illustrating example computing architectures in which disclosed technologies can be implemented.

FIGS. 10A-10C are flowcharts of example methods for generating and displaying machine learning explanation information.

FIG. 11 is a diagram of an example computing system in which some described embodiments can be implemented.

FIG. 12 is an example cloud computing environment that can be used in conjunction with the technologies described herein.

## DETAILED DESCRIPTION

### Example 1 - Overview

Machine learning is increasingly being used to make, or help make, various decisions, or to otherwise analyze data. Machine learning techniques can be used to analyze data more quickly or accurately than could be performed by a human. In some cases, it can be impracticable for humans to manually analyze a data set. Thus, machine learning has facilitated the rise of "big data," by providing ways that such data can be put to practical use.

However, even for experts in the field, machine learning can be complicated to understand. The situation can be even more complex when machine learning is applied to particular applications in particular fields. That is, a computer scientist may understand the algorithms used in a machine learning technique, but may not understand the subject matter domain well enough to ensure that a model is accurately trained or to properly evaluate results provided by machine learning. Conversely, a domain expert may be well versed in a given subject matter area, but may not understand how the machine learning algorithms work.

Consequently, if users do not understand how a machine learning model works, they may not have confidence in the results provided by machine learning. If users are not confident in the results of machine learning, they may be less likely to use machine learning at all, possibly foregoing advantages that could be gained.

As an example, machine learning models can often use tens, hundreds, or thousands of input parameters, which can also be referred to as features or variables. It can be difficult for users to understand how a given variable influences, or contributes, to a result, such as a prediction, provided by a machine learning model. In many cases, this complexity is hidden from end users - end user applications may simply provide an answer (e.g., yes, no, a score, or a classification). Such end users may not be provided with an opportunity to obtain further details about how a result was reached.. Even if the end users can access more details, they may have to use a different software application, and, in any event, software used to obtain such details may be complex to use, and the data available may be complex and difficult for users to quickly understand, particularly in the context of a particular use case the user is analyzing.

The above-noted problems can be compounded by legal requirements that actions taken on the basis of machine learning models be explainable, such as to an individual who was affected by such action. For example, if a machine learning algorithm is used to automatically approve or deny credit, a company may be legally required to explain to the individual why they were denied credit. As described above, typical machine learning applications do not easily provide this functionality, either for end users within a company or in a way that may allow automated or self-service by the affected individual (e.g., an application can automatically display the underlying factors used by a machine learning model in reaching a decision). Accordingly, room for improvement exists.

In some aspects, the present disclosure facilitates the analysis of results provided by a machine learning algorithm by allowing a user to obtain greater detail regarding factors that contributed to a result. For example, initially a user interface screen may simply display results, without provided details about how the results were determined. A user can select to obtain more detail about how the results were obtained, such as by selecting a user interface control. In response, the user can be presented with relatively high level information regarding a machine learning model, generally, such as its overall predictive power or prediction confidence. Such information can be referred to herein as a global explanation.

In some cases, a data set, or particular subsets of a data set, can be associated with an object. An object can be an instance of a particular type or class of data structure or data type, such as an abstract data type (or similar programming construct). The object may be associated with particular values for particular features that are associated with the object. The values can be stored, in some cases, in database records.

Information can also be provided for individual analyses used in determining a result. This type of information can be referred to herein as a local explanation. For example, if multiple options were considered, scored, and ranked, in addition to listing a recommended option, these other considered options can be presented to a user. In this case, the user can determine that a particular option was selected from a number of options based on the overall scores for the options.

In some cases, a user may desire to obtain even more granular detail about why a particular result was obtained for a particular analysis or analyses. As described above, machine learning algorithms often use many input parameters in reaching a decision. A user may wish to understand how all or a portion of the input parameters contributed to a particular result. For example, when comparing a number of options, it could be that a selected option has one or more features that scored more favorably than the features for another option. This granular detail may be provided in response to user input.

A user may be allowed to obtain even greater detail about a result. For example, if a result was based on prior interactions with a particular supplier, a user may request to see records associated with such interactions.

Information at the various levels of granularity can be presented in various manners. For instance, an application can be configured to display explanation information at a set level of granularity, without providing a user the option to move to a different level of granularity. Or, multiple levels of granularity may be available, and a user can choose a level of granularity to view at a given time. Allowing a user to select a level of explanation granularity can be beneficial, as it can provide a relatively simpler user interface display in some circumstances - displaying explanation information, such as at a selected level of detail, when requested by a user. In another cases, a single user interface display may provide multiple levels of granularity.

Various actions can be taken in response to an explanation, including training/retraining a machine learning model. For example, when a local explanation provides an indication of features that were more or less relevant to a result, less relevant features can be removed from use with the machine learning model. A new model can be trained, or an existing model retrained, using features selected based on a local explanation. In some cases, relevant features can be automatically selected, such as by comparing a relevance value for a feature with a threshold, and omitting features from use with the machine learning model that fail to satisfy the threshold. In other cases, a user can manually select features to be included or omitted from a model, including by being presented with options for including or excluding features (e.g., a dropdown menu or selection boxes) in a graphical user interface. Selecting another user interface control can then cause a machine learning model to be retrained or a new machine learning model to be generated.

Using a machine learning model that omits less relevant features can have various advantages. Removing less relevant features can increase the accuracy of the machine learning model, at least for a particular purpose (e.g., type of analysis). In addition, removing features from the machine learning model can improve the computing efficiency of the model, since a smaller amount of data need be gathered, stored, and processed.

## Example 2 - Example Use of Features for Training and Use of Machine Learning Models

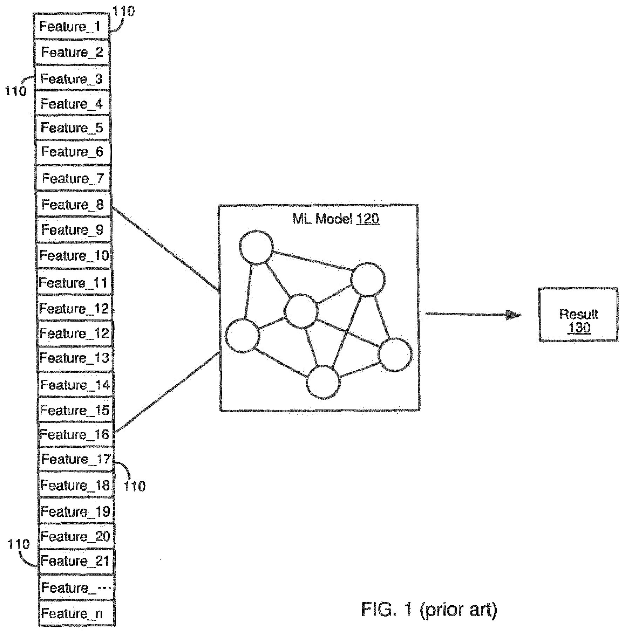

FIG. 1 schematically depicts how a plurality of features 110 can be used as input to a machine learning model 120 to provide a result 130. Typically, the types of features 110 used as input to provide the result 130 are those used to train a machine learning algorithm to provide the machine learning model 120. Training and classification can use discrete input instances of the features 110, where each input instance has values for at least a portion of the features. Typically, the features 110, and their respective values, are provided in a way that uses a particular feature in a particular way. For example, each feature 110 may be mapped to a variable that is used in the machine learning model.

The result 130 maybe be a qualitative or quantitative value, such as a numeric value indicating a likelihood that a certain condition will hold or a numeric value indicting a relative strength of an outcome (e.g., with high number indicating stronger/more valuable outcomes). For qualitative results, the result 130 might be, for example, a label applied based on the input features 110 for a particular input instance.

Note that for any of these results, typically the result 130 itself does not provide information about how the result was determined. Specifically, the result 130 does not indicate how much any given feature 110 or collection of features contributed to the result. However, in many cases, one or more features 110 will contribute positively towards the result, and one or more features may argue against the result 130, and instead may contribute to another result which was not selected by the machine learning model 120.

Thus, for many machine learning applications, a user may be unaware of how a given result 130 relates to the input features for a particular use of the machine learning model. As described in Example 1, if users are unsure what features 110 contributed to a result 130, or to how or to what degree they contribute, they may have less confidence in the result. In addition, users may not know how to alter any given feature 110 in order to try and obtain a different result 130.

In at least some cases, it is possible to determine (for individual classification results as an average or other statistical measure of a machine learning model 120 over a number of input instances) how features 110 contribute to results for a machine learning model. In particular, Lundberg, et al., "Consistent Individualized Feature Attribution for Tree Ensembles" (available at https://arxiv.org/abs/1802.03888, and incorporated by reference herein) describes how SHAP (Shapley additive explanation) values can be calculated for attributes used in a machine learning model, allowing the relative contribution of features 110 to be determined. However, other contextual interpretability measures (which can also be termed contextual contribution values) may be used, such as those calculated using the LIME (local interpretable model-agnostic explanations) technique, described in Ribeiro, et al., "'Why Should I Trust You?' Explaining the Predictions of Any Classifier," available at https://arxiv.org/pdf/1602.04938.pdf, and incorporated by reference herein. In general, a contextual contribution value is a value that considers the contribution of a feature to a machine learning result in the context of other features used in generating the result, as opposed to, for example, simply considering in isolation the effect of a single feature on a result.

Contextual SHAP values can be calculated as described in Lundberg, *et al.,* using as using the equation:

$$\phi_i = \sum_{S \subseteq N\{i\}} \frac{|S|!\,(M - |S| - 1)!}{M!} [f_x(S \cup \{i\}) - f_x(S)]$$

as defined and used in *Lundberg, et al.*

A single-variable (or overall) SHAP contribution (the influence of the feature on the result, not considering the feature in context with other features used in the model), $\phi_1$, can be calculated as:

$$\psi_X = \phi_1 = logit\left(\hat{P}(Y|X)\right) - logit(\hat{P}(Y))$$

Where:

$$logit\left(\hat{P}(Y|X)\right) = logit\left(\hat{P}(Y)\right) + \sum_{i=1}^{1} \phi_i$$

And

$$logit(p) = log \frac{p}{1-p}$$

The above value can be converted to a probability scale using:

$$\hat{P}(Y|X) = s\left(\psi_X + logit\left(\hat{P}(Y)\right)\right)$$

Where s is the sigmoid function:

$$s(x) = \frac{1}{1 + e^{-x}}$$

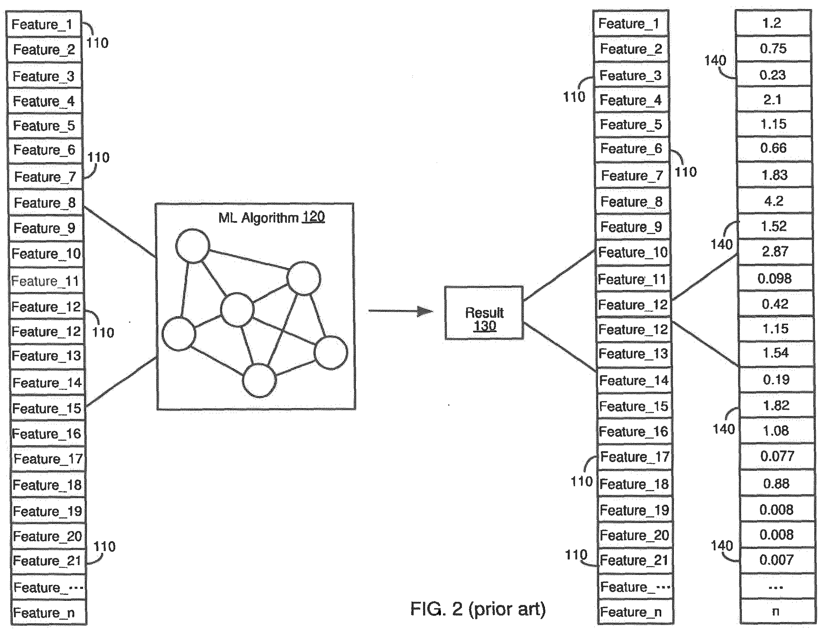

FIG. 2 is generally similar to FIG. 1, but illustrates how contribution values 140 (such as those calculated using the SHAP methodology) can be calculated for features 110. As explained in Example 1, a large number of features 110 are used with many machine learning models. Particularly if the contribution value 140 of each (or most or many) of the features 110 is comparatively small, it can be difficult for a user to understand how any feature contributes to results provided by a machine learning model, including for a particular result 130 of a particular set of values for the features 110.
Similarly, it can be difficult for a user to understand how different combinations of features 110 may work together to influence results of the machine learning model 120.
In some cases, machine learning models can be simpler, such that post-hoc analyses like calculating SHAP or LIME values may not be necessary. For example, at least some regression (e.g., linear regression) models can provide a function that provides a result, and in at least some cases a relatively small number of factors or variables can determine (or at least primarily determine) a result. That is, in some cases, a regression model may have a larger number of features, but a relatively small subset of those features may contribute most to a prediction (e.g., in a model that has ten features, it may be that three features determine 95% of a result, which may be sufficient for explanatory purposes such that information regarding the remining seven features need not be provided to a user).
As an example, a linear regression model for claim complexity may be expressed as:
Claim Complexity - 0.47 + $10^{-6}$ Capital + 0.03 Loan Seniority - 0.01 Interest Rate Using values of 100,000 for Capital, 7 for Loan Seniority, and 3% for Interest Rate provides a Claim Complexity value of 0.75. In this case, global explanation information can include factors such as the overall predictive power and confidence of the model, as well as the variable coefficients for the model (as such coefficients are invariant over a set of analyses). The local explanation can be, or relate to, values calculated using the coefficients and values for a given analysis. In the case above, the local explanation can include that Capital contributed 0.1 to the result, Loan Seniority contributed 0.21, and Interest Rate contributed - 0.03.

**Example 3 - Example Interactions Between Features of Machine Learning Model**

In some embodiments, explainable machine learning can include explanations of relationships between features. These relationships can be determined by various techniques, including using various statistical techniques. One technique involves determining mutual information for pairs of features, which identifies the dependence of the features on one another. However, other types of relationship information can be used to identify related features, as can various clustering techniques.

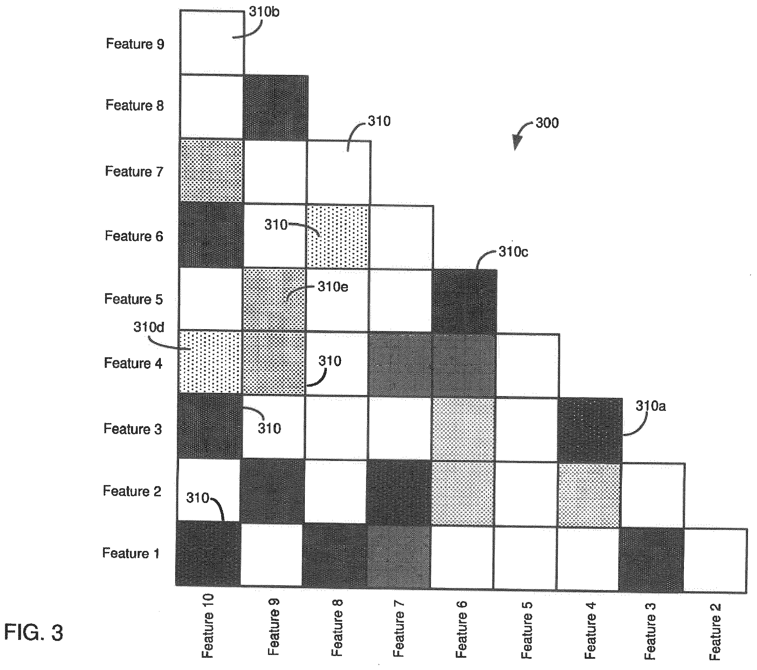

FIG. 3 illustrates a plot 300 (e.g., a matrix) of mutual information for ten features. Each square 310 represents the mutual information, or correlation or dependence, for a pair of different features. For example, square 310a reflects the dependence between feature 3 and feature 4. The squares 310 can be associated with discrete numerical values indicating any dependence between the variables, or the values can be binned, including to provide a heat map of dependencies.
As shown, the plot 300 shows the squares 310 with different fill patterns, where a fill pattern indicates a dependency strength between the pair of features. For example, greater dependencies can be indicated by darker fill values. Thus, square 310a can indicate a strong correlation or dependency, square 310b can indicate little or no dependency between the features, and squares 310c, 310d, 310e can indicate intermediate levels of dependency.
Dependencies between features, at least within a given threshold, can be considered for presentation in explanation information (at least at a particular level of explanation granularity). With reference to the plot 300, it can be seen that feature 10 has dependencies, to varying degrees, on features 1, 3, 4, 6, 7. Thus, a user interface display could provide an indication that feature 10 is dependent on features 1, 3, 4, 6, and 7. Or, feature 4 could be excluded from the explanation, if a threshold was set such that feature 4 did not satisfy the interrelationship threshold. In other embodiments, features having at least a threshold dependence on features 3, 4, 5, 6, 7 could be added to explanation information regarding dependencies of feature 10.
Various criteria can be defined for present dependency information in explanation information, such as a minimum or maximum number of features that are dependent on a given feature. Similarly, thresholds can be set for features that are considered for possible inclusion in an explanation (where features that do not satisfy the threshold for any other feature can be omitted from the plot 300, for example).

Various methods of determining correlation can be used, such as mutual information. Generally, mutual information can be defined as $I(X; Y) = D_{KL}(P_{X,Y} \| P_X \otimes P_Y)$, where X and Y are random variables having a joint distribution $P_{(X,Y)}$ and marginal distributions of $P_X$ and $P_Y$. Mutual information can include variations such as metric-based mutual information, conditional mutual information, multivariate mutual information, directed information, normalized mutual information, weighted mutual information, adjusted mutual information, absolute mutual information, and linear correlation. Mutual information can include calculating a Pearson's correlation, including using Pearson's chi-squared test, or using G-test statistics.

When used to evaluate a first feature with respect to a specified (target) second feature, supervised correlation can be used: $scorr(X, Y) = corr(\psi_X, \psi_Y)$, where *scorr* is Pearson's correlation and $\psi_X = logit(\hat{P}(Y|X)) - logit(P(Y))$ (binary classification).

In some examples, dependence between two features can be calculated using a modified $X^2$ test:

$$cell(X = x, Y = y) = \frac{(O_{xy} - E_{xy}) \cdot |O_{xy} - E_{xy}|}{E_{xy}}$$

Where:

$$E_{xy} = \frac{\sum_{i=1}^{I} O_{iy} \sum_{j=1}^{J} O_{xj}}{N}$$

$O_{xy}$ is the observed count of observations of $X=x$ and $Y=y$, while $E_{xy}$ is the count that is expected if $X$ and $Y$ are independent.

Note that this test produces a signed value, where a positive value indicates that observed counts are higher than expected and a negative value indicates that observed counts are lower than expected.

In yet another implementation, interactions between features (which can be related to variability in SHAP values for a feature) can be calculated as:

$$logit\left(\hat{P}(Y|X_1, X_2, \dots X_n)\right) = logit\left(\hat{P}(Y)\right) + \sum_{i,j} \phi_{ij}$$

Where $\phi_{ii}$ is the main SHAP contribution of feature *i* (excluding interactions) and $\phi_{ij} + \phi_{ji}$ is the contribution of the interaction between variables *i* and *j* with $\phi_{ij} \simeq \phi_{ji}$. The strength of an interaction between features can be calculated as:

$$I_{ij} = 2\frac{\sum|\phi_{ij}| + |\phi_{ji}|}{\sum|\phi_{ii}| + \sum|\phi_{jj}|}$$

**Example 4** - **Example Display for Illustrating Relationships Between Features**

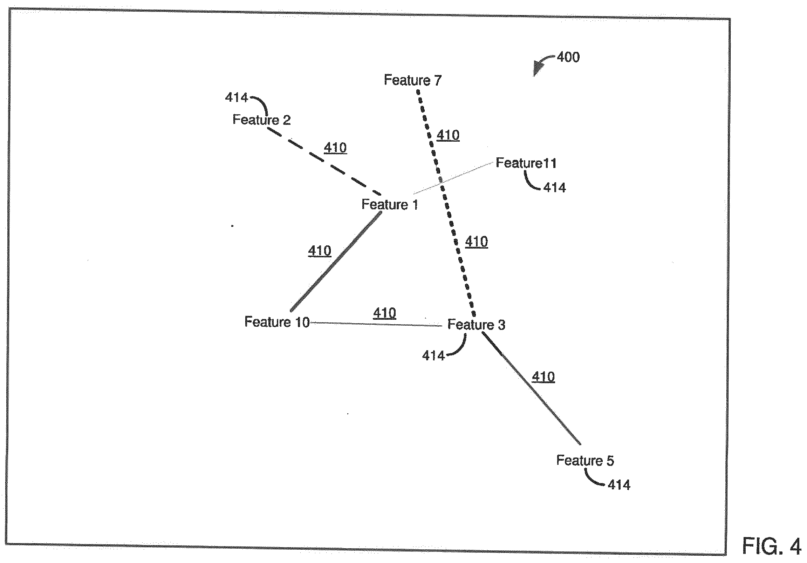

Mutual information, or other types of dependency or correlation information, such as determined using techniques described in Example 2, can be presented to a user in different formats. For example, FIG. 4 illustrates a plot 400 showing relationships 410 between features 414, which can be features for which the strength of the relationship satisfied a threshold.

The relationships 410 can be coded with information indicating the relative strength of the relationship. As shown, the relationships 410 are shown with different line weights and patterns, where various combinations of pattern/weight can be associated with different strengths (e.g., ranges or bins of strengths). For instance, more highly dashed lines can indicate weaker relationships for a given line weight, and increasingly heavy line weights can indicate stronger relationships/dependencies. In other cases, the relationships 410 can be displayed in different colors to indicate the strength of a relationships.

**Example 5 - Example Progression Between User Interface Screens with Different Granularities of Machine Learning Explanation**

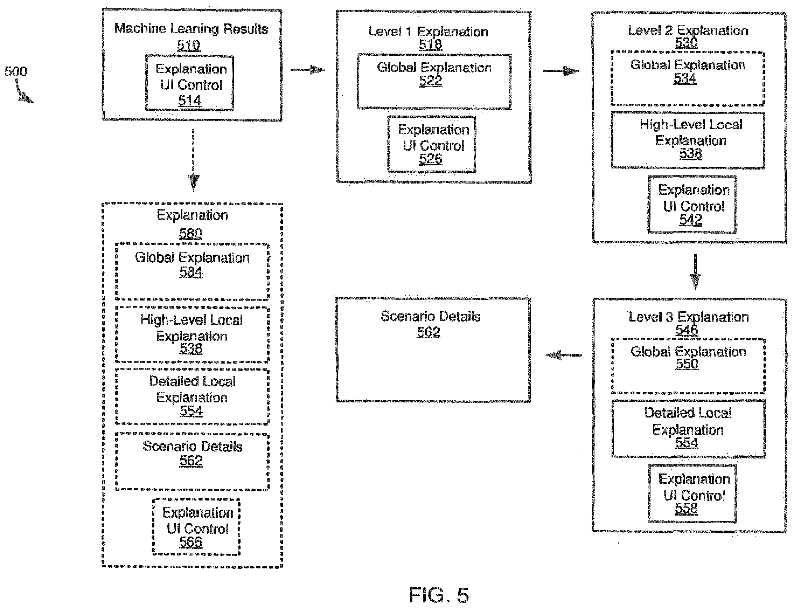

As described in Example 1, machine learning explanations can be provided, including upon user request, at various levels of granularity. FIG. 5 illustrates a scenario 500 where a user can selectively choose to receive machine learning explanations at various levels of granularity, or where a display concurrently displays explanation information at multiple levels of granularity.

In the scenario 500, a user interface screen 510 can represent a base display that provides results of one or more machine learning analyses without explanation information. By selecting an explanation user interface control 514, the user can navigate to a user interface screen 518 that provides a first level explanation of at least one of the machine learning analyses displayed on the user interface screen 510.

The first level explanation of the user interface screen 518 can provide a global explanation 522. The global explanation 522 can provide information regarding analysis provided by a machine learning algorithm, generally (e.g., not with respect to any particular analysis, but which may be calculated based at least in part on a plurality of analyses). The global explanation 522 can include information such as the predictive power of a machine learning model, the confidence level of a machine learning model, contributions of individual features to results (generally), relationships (such as dependencies) between features, how results are filtered, sorted, or ranked, details regarding the model (e.g., the theoretical basis of the model, details regarding how the model was trained, such as a number of data points used to trained the model, information regarding when the model was put into use or last trained, how many analyses have been performed using the model, user ratings of the model, etc.), or combinations of these types of information.

In some cases, aspects of the global explanation 522 can be determined by evaluating a data set for which the results are known. Comparing the results provided by the machine learning algorithm with the known, correct results can allow factors such as the predictive power and confidence of the model to be determined. Such comparison can also allow individual contributions of features toward a model result to be calculated (e.g., by taking the mean over observations in the training set), dependencies between features, etc.

Although, as will be further described, the scenario 500 allows a user to obtain different levels of details regarding a local explanation, it should be appreciated that global explanation information can be handled in a similar manner. That is, information such as the overall predictive power of a machine learning model and its confidence value can be presented at a high-level. A user can select a user interface control to obtain more granular global explanation information, such as regarding feature contributions/dependencies, if desired.

From the user interface screen 518, by selecting a user interface control 526, a user can navigate to a user interface screen 530 to obtain a high-level local explanation 538 of one or more machine learning analyses. Optionally, the user interface screen 530 can include a global explanation 534, which can be the same as the global explanation 522 or can be different (for example, being more granular).

The high-level local explanation 538 can include a high-level explanation of why a particular result was obtained from a machine learning model for one or more particular analyses. The information can include a score for an analysis, which can be supplemented with information regarding the meaning of a score. For example, if a score indicates a "good" result, the score can be highlighted in green or otherwise visually distinguished. Similarly, "average" results can be highlighted in yellow or orange, while "bad" results can be highlighted in red.

In some cases, a machine learning result, such as displayed on the user interface screen 510, may be a single result of multiple considered options, or otherwise may be a subset of all considered options. A result provided in the user interface screen 518 can be the highest ranked/selected result, in some implementations. Thus, a user may be unaware of why the result was selected/any other options that may have been considered. The high-level local explanation 538 can include information for additional (including all, or a subset of) options that were considered, and can list the scores for the results, optionally with color-coding, as described above, or otherwise provide information to indicate a qualitative category for the result (e.g., "good." "bad," "average").

From the user interface screen 530, by selecting a user interface control 542, a user can navigate to a user interface screen 546 to obtain a detailed local explanation 554 of one or more machine learning analyses. Optionally, the user interface screen 546 can include a global explanation 550, which can be the same as the global explanation 522 or can be different (for example, being more granular).

Compared with the high-level local explanation 538, the detailed local explanation 554 can include more granular details regarding one or more machine learning analyses. Where the high-level local explanation 538 included an overall score for an analysis, the detailed local explanation 554 can include values for individual features of the analysis, which can be values as input to the machine learning algorithm, values calculated from such input values, or a combination thereof. Considering the claim complexity model discussed in Example 2, values of input features can include the Capital value of 100,000, the Loan Seniority value of 7 years, or the Interest Rate of 3%. Values calculated from input features can include the 0.1 value for Capital obtained using the 100,000 input value, the 0.03 value for Loan Seniority obtained using the 7 years input value, or the -0.01 value for Interest Rate calculated using the 3% input value.

If desired, qualitative aspects of the input or calculated values can be indicated in an analogous manner as described for the high-level local explanation 538. For instance, input or calculated features that are high (or favorable) can be highlighted in green, while low (or negative) features can be highlighted in red, and intermediate (or average) features can be highlighted in orange or yellow. Comparative information can also be provided, such as providing an average value for multiple analysis from which a result was selected or an average value for a set of analyses evaluated using the machine learning algorithm (which can be associated with a data set used to train the machine learning algorithm/determine the global explanation 522).

In some cases, a user may wish to view information regarding a machine learning result, or from alternatives that were considered but not selected. An example discussed later in this disclosure relates to selection of a supplier for a particular item. A number of suppliers may be considered and scored based on various criteria, such as price, delivery time, and minimum order quantity. The machine learning result presented in the user interface screen 510 can be the selected or recommend supplier. Information presented in the user interface screen 530 for the high level local explanation 550 can include the score for the selected supplier, and for alternative suppliers considered. Information presented in the user interface screen 546 for the detailed local explanation 554 can include input values for the different suppliers, such as the different delivery times, minimum quantities, and prices.

By selecting an explanation user interface control 558, the user can be presented with a scenario details user interface screen 562. The scenario details user interface screen 562 can provide information regarding one or more results or considered options for a scenario (a set of one or more analyses).

In the supplier selection scenario, the scenario details user interface screen 562 can present information regarding prior interactions with a supplier - which can include information related to features used by the machine learning model (e.g., actual delivery time) or features not used by the machine learning model but which may be of interest to a user (e.g., whether any problems were noted with the supplier, an item defect rate).

Although FIG. 5 illustrates a particular progression between the user interface screens 510, 518, 530, 546, 562, other alternatives are possible. For example, a user may be provided with an option to view the scenario details user interface screen 562 from one or more of the user interface screens 510, 518, 530. Similarly, a user may be provided with an option to view the level 2 explanation screen 530 or the level 3 explanation screen 546 from the machine learning results user interface screen 510. A user may be provided with an option to transition to the level 3 explanation user interface screen 546 from the level 1 explanation user interface screen 518.

In a similar manner, aspects of the different displays 510, 518, 530, 546, 562 can be reconfigured as desired. For example, an explanation user interface screen 580 includes one or more of a global explanation 584 (which can be analogous to the global explanation 522 or the global explanation 534), the high-level local explanation 538, the detailed local explanation 554, or the scenario details 562. An explanation user interface control 566 (or multiple controls) can allow a user to selectively display various information elements included in the explanation user interface screen 580.

**Example 6 - Example User Interface Screens for Displaying Machine Learning Explanation Information**

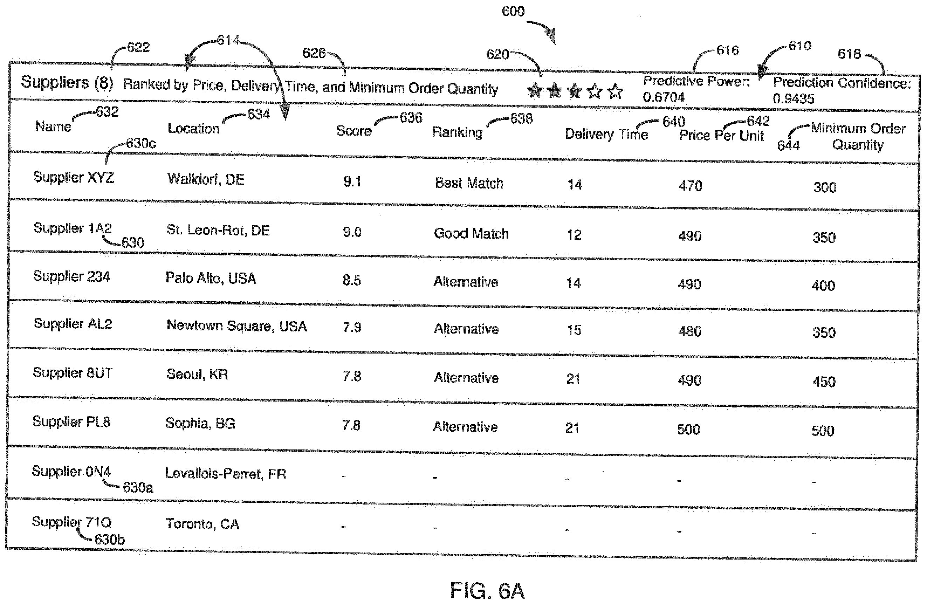

FIGS. 6A-6D illustrate embodiment of an example user interface screen 600 that provides explanation information for a machine learning model to a user. The user interface screen 600 can implement some or all of the user interface screens 510, 518, 530, 546, 562, 580 of FIG. 5. Text in FIGS. 6A-6D reflects the scenario discussed in Example 5, relating to a machine learning model that selects or recommends a supplier for the order of a particular part.

FIG. 6A illustrates the user interface screen 600 providing global explanation information 610 and local explanation information 614. As shown in FIG. 6A, the user interface screen 600 can at least generally correspond to the level 2 explanation user interface screen 530 of FIG. 5.

The global explanation information 610 includes a display 616 of the predictive power of the machine learning model and a display 618 of the prediction confidence of the machine learning model. This information can give a user a general sense of how useful the results of the machine learning model might be. An indicator 620 can reflect user-feedback regarding the usefulness of the machine learning model - as shown providing a star rating (e.g., a larger number of stars indicating increased user confidence or perceived value of the machine learning model). Ranking/scoring criteria 626 is provided in the user interface screen 600, which indicates how results 630 for individual suppliers are listed on the screen. As shown, the ranking is based on consideration of input features of price, delivery time, and minimum order quantity.

The local explanation information 614 can include a variety of aspects. The user interface screen 600 can display a number of options 622 considered. As shown, the user interface screen 600 indicates that eight suppliers were considered in generating a result, such as a recommended supplier.

The list of results 630 includes, for six of the eight suppliers considered in the example scenario, the name 632 of the supplier, the location 634 of the supplier, the score 636 assigned to the supplier, a qualitative indicator 638 that assigns a label to the supplier (e.g., "best," "good," "alternative," as shown), the delivery time 640 of the supplier, the price per unit 642 of the part from the supplier, and the minimum order quantity 644 required by the supplier associated with a given result 630. Note that values are not supplied for the score 636, qualitative label 638, delivery time 640, price per unit 642, or minimum order quantity for suppliers associated with results 630a, 630b. This can be, for example, because information needed to analyze the suppliers associated with results 630 using the machine learning model was not available, or because the suppliers otherwise did not meet threshold criteria (e.g., the part is not available from those two suppliers, even though a company might obtain other parts from those suppliers).

It can be seen that both the global explanation information 610 and the local explanation information 614 can assist a user in understanding a result provided by a machine learning model. If the user was only presented with the result, such as an indicator identifying supplier 630c as the selected result, the user may not have any idea of the basis for such a selection, and so may question whether the result is reasonable, accurate, or should be followed. The global explanation information 610 provides a user with a general understanding of how useful predictions provided by the machine learning model may be. The local explanation information 614 allows a user to even better understand how a result for a particular scenario was determined. The user knows that other alternatives were considered, what their scores were, and the input values used to determine the score. So, the user can see that supplier 630c indeed had the highest score, and can infer that the selection was based on the supplier having the best overall combination of input values for the suppliers 630 considered.

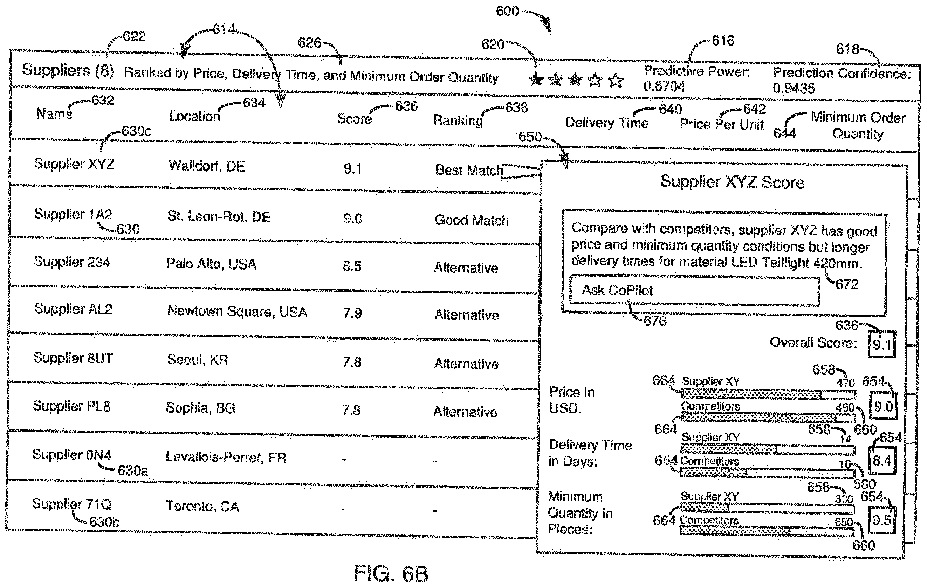

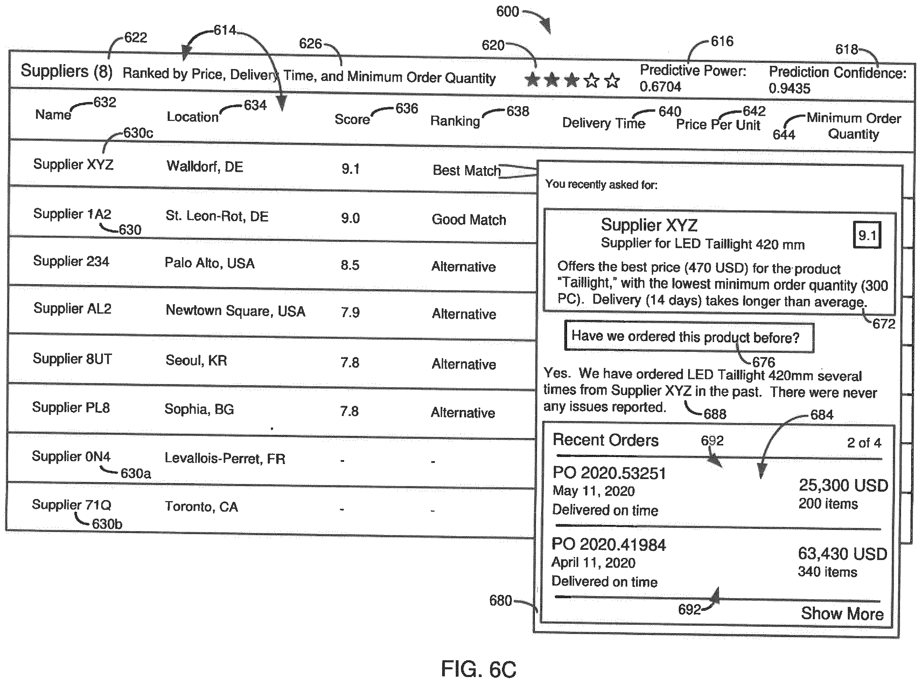

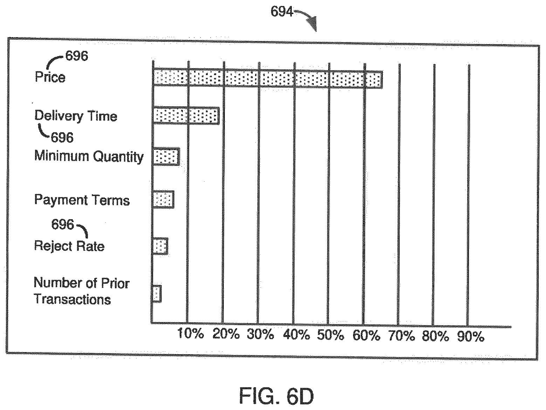

In FIG. 6A, a user may be able to select a result 630 (e.g., such as by selecting the score 636 or qualitative indicator 638) to view more granular local explanation information 650, such as for that particular result, as shown in FIG. 6B. The user interface screen 600 as shown in FIG. 6B can correspond to the level 3 user interface screen 630 of FIG. 6.

The granular local explanation information 650 includes the score 636, which can be highlighted or otherwise visually differentiated to indicate a qualitative aspect of the score (e.g., corresponding to the qualitative indicator 638). The granular local explanation information 650 includes score component information 654. The score component information 654 breaks down the overall score 636 into scores for individual features that contribute to the overall score.

For each aspect of the component information 654, information can be provided that compares component information of the selected supplier 630 with information for other suppliers that were considered (which can be, for example, an average value from suppliers considered other than the selected supplier, or of all considered suppliers, including the selected supplier). The information can input the input value 658 for the selected supplier and the input value 660 for the other suppliers. Bar graphs 664 or other visual indicators can be used to help a user visualize the relative significance of the input values 658, 660.

The granular local explanation information 650 can include a textual description 672 of a rationale regarding why the selected supplier 630 was or was not selected as the result of the machine learning model. The textual description 672 can be automatically produced using application logic, such by using various templates and keywords associated with particular values or relationships (e.g., using "lower" when one score is lower than another score).

The textual description 672, as shown, explains how the component information 654 for a selected supplier compared with component information for other suppliers. When the supplier 630 for which additional detail is being provided is not the selected supplier 630c, the component information 650 and the textual description 672 can compare the values for the supplier to the selected supplier in addition to, or rather than, providing the average value as the comparison.

An input field 676 can be provided that allows a user to obtain more information regarding a selected supplier 630, such as historical records associated with the supplier. The input field 676 can correspond to the user interface control 658 of FIG. 6 that allows a user to view the scenario details user interface screen 662.

It can be seen how the granular local explanation information 650 provides additional local explanation information 614 beyond that provided in the user interface screen 600 of FIG. 6B. The component information 654 allows a user to see how individual features contributed to an overall result. Providing the input values 658, as well as the bar graphs 664 and the textual description 672, assists a user in understanding why the supplier 630c was chosen as opposed to other suppliers. For example, by looking at the granular local explanation information 650, the user can appreciate that the supplier associated with the result 630c was chosen at least in part because of its comparatively low price and minimum order quantity, even though the delivery time was longer than other suppliers.

Thus, the granular local explanation information 650 can help a user determine whether selection of the supplier 630c was an appropriate decision or conclusion. In some cases, for example, a user may decide that delivery time is more important than as applied by the machine learning model, and so may choose to select a different supplier with a shorter delivery time, even though the price or minimum order quantity may not be as favorable as the supplier 630c. Viewing granular local explanation information 650 for other suppliers 630, such as suppliers still having a comparatively high scores 636, can assist a user in evaluating other suppliers that might be appropriate for a given purchase.

FIG. 6C illustrates the user interface screen 600 after a user has entered a query in the input field 676. In some cases, input provided in the input field 676 can be used to generate a query in a query language (e.g., SQL), including using natural language processing techniques. Suitable software for processing input provided in the input field 676 includes technologies associated with Fiori CoPilot, available from SAP SE, of Walldorf, Germany. Data used to form a query can include data associated with a selected supplier, including data used in generating the result 630c. For example, a name or other identifier of a selected supplier, as well as a part number, can be used as part of a formulated query.

In response to input provided in the input field 676 and query execution, a panel 680 of the user interface screen 600 (which can previously have displayed the granular local explanation information 650) can display scenario details 684, which can correspond to information provided in the scenario details user interface screen 562 of FIG. 5.

The panel 680 can include a result explanation 688, in the form of natural language text, as well as results data 692. The results explanation 688 can provide a high level summary of the results. For example, as shown, a user has asked if a particular part was previously obtained from a selected supplier 630. The results explanation 688 provides a yes/no answer, whereas the results data 692 can provide details regarding specific prior interactions with the supplier, which can be based at least in part on database records accessed through a query generated using input provided in the input field 676 and data associated with the selected supplier in the user interface screen 600, including the granular local explanation 650, or the local explanation information 614, generally.

However, the results explanation 688 can be configured to provide additional information that may be of interest to a user. As shown, the results explanation 688 indicates whether any issues were previously experienced with the supplier, generally. Such information can be helpful, such as if a number of results are included in the results data 692. Otherwise, such information might be overlooked by a user, including if the user did not review all of the results data 692.

FIG. 6D presents a graph 694 that can be displayed on the user interface screen 600, such as in association with the granular local explanation information 650. The graph 694 illustrates contributions of individual features 696 to an overall result, which can help a user assess why a particular supplier 630 was or was not selected as a result, or why a particular score 636 was obtained for a particular supplier.

**Example 7 - Example Process for Generating Machine Learning Explanations**

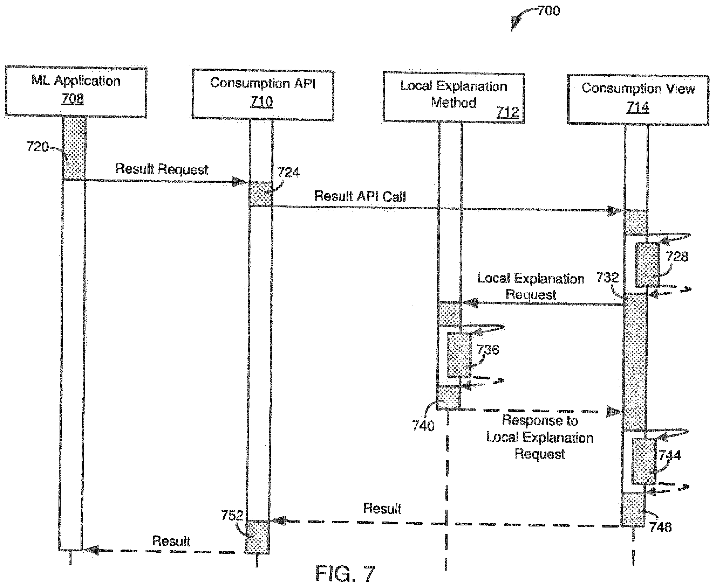

FIG. 7 is a timing diagram 700 that provides an example of how an application 708 that provides machine learning results can obtain a local explanation. The timing diagram 700 can represent a process useable to generate various user interface screens of FIG. 5, or one or more permutations of the user interface screen 600 of FIG. 6.

The timing diagram 700 illustrates interactions between the application 708, a consumption API 710, a consumption view 714, and a local explanation method 712. The consumption API 710 and the consumption view 714 can be views based on data obtained from a database. In particular examples, the consumption API 710 and the consumption view 714 can be implemented as in technologies provided by SAP SE, of Walldorf, Germany, including using SAP's Core Data Services, including Core Data Services Views.

At 720, the application 708 sends a request for a prediction using a machine algorithm to the consumption API 710. The request can be generated automatically in response to processing by the application 708 to generate a user interface screen, or can be called in response to specific user action (e.g., selection of a user interface control).

The request is received by the consumption API 710. In response, at 724, the consumption API 710 calls functionality of the consumption view 714 to generate a result, or prediction, using a machine learning model. The consumption view 714 can generate the result at 728. Generating the result at 728 can include accessing other views (e.g., composite views or basic views), as well as calling a machine learning algorithm (such as in a function library), including calling the machine learning algorithm using data obtained from the other views.

At 732, the consumption view 714 can issue an explanation request to the local explanation method 712. The explanation request can include all or a portion of the result generated at 728 or data used in generating the result. At 736, the local explanation method 712 generates a local explanation for data received in the request generated at 728. The local explanation can include information as described in Examples 1, 5, or 6. The local explanation can be stored at 736, and a response can be sent to the consumption view 714 at 740. In some cases, the response includes all or a portion of the local explanation generated at 736. In other cases, the response can be an indication that the local explanation was successfully generated, and optionally an identifier useable to access such local explanation.

Optionally, at 744, the consumption view 714 can read a global explanation for the machine learning model. At 748, the machine learning result is returned to the consumption API 710 by the consumption view 714. At 752, the machine learning result is returned to the application 708 by the consumption API 710. In some cases, the communications at 748, 752 can include additional information, such as all or a portion of a global explanation or a local explanation, or information useable to access one or both of the explanations. That is, in some cases the response generated at 752 for the request issued at 720 includes the machine learning result and explanation information. The application 708 can automatically display the explanation information, or maintain the explanation information in the event a user later requests such information. In other cases, the response at 752 does not include, or at least does not include all of, the explanation information. In such cases, the application 710 can later issue a request for the explanation information (including by making a suitable request to the consumption API 710) or can otherwise access the explanation information (e.g., by using identifiers sent at 752).

It should be appreciated the operations shown in the timing diagram 700 can be carried out in a different order than shown. For example, after receiving the request 720, the consumption API 710 can call the local explanation method 712 to generate the local explanation, at least when the local explanation does not depend on the machine learning result. A status of the request to generate the local explanation can be returned to the consumption API 710, which can then carry out the remainder of the operations shown in FIG. 7 (i.e., determining a machine learning result, reading local and global explanation information, and returning results to the application 708).

**Example 8 - First Example Architecture for Providing Machine Learning Explanations**

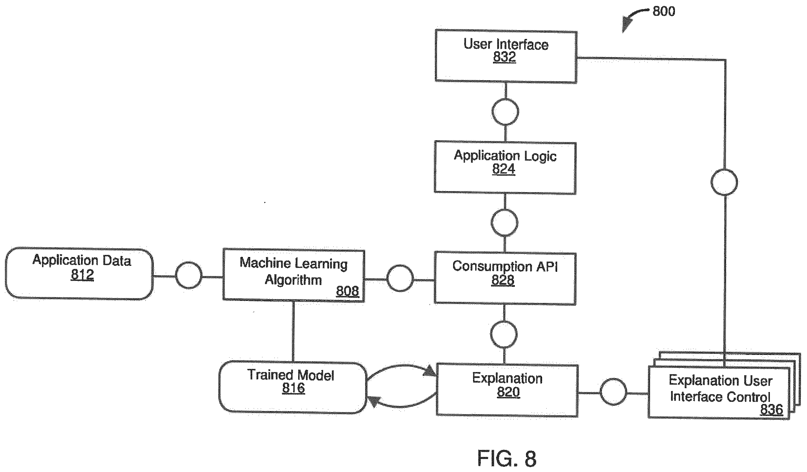

FIG. 8 illustrates an example architecture 800 in which disclosed technologies can be implemented. A machine learning algorithm 808 can receive application data 812, such as through an interface provided by the machine learning algorithm. The machine learning algorithm 808 can access a trained model 816, which can be accessed by an explanation component 820 to receive, or determine, a global explanation, or to generate analysis results.

Application logic 824 can access a consumption API 828, which can cause the machine learning algorithm 808 to receive the application data 812 and calculate a result using the trained model 816. In turn, the consumption API 828 can access the explanation component 820 to obtain one or both of a local explanation or a global explanation. Interactions between the consumption API 828 and the explanation component 820 can be at least analogous to the process described with respect to FIG. 7, where the application 808 can be associated with the application data 812, the application logic 824, and a user interface 832 that includes one or more explanation user interface controls 836 (e.g., for obtaining different types of explanations, such as global or local, or obtaining explanations at different levels of granularity).

**Example 9 - Second Example Architecture for Providing Machine Learning Explanations**

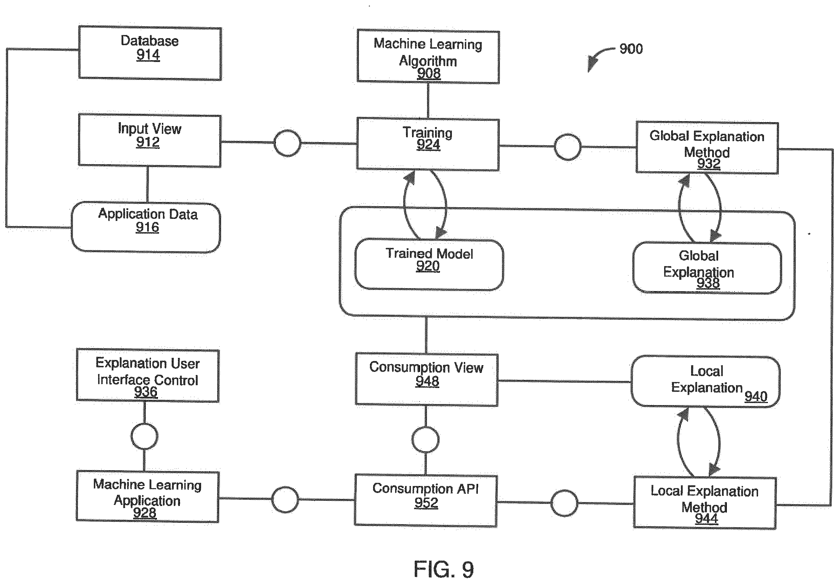

FIG. 9 illustrates an example architecture 900 in which disclosed technologies can be implemented. A machine learning algorithm 908 can access an input view 912 (e.g., data obtained from a database system 914, such as a core data services view) that can be generated from application data 916. The machine learning algorithm 908 can use the application data 916 to generate a trained machine learning model 920 (using a training component 924) or in generating a machine learning result for a particular analysis/observation requested by a machine learning application 928 (an application that provides machine learning results obtained using the machine learning algorithm 908).

A global explanation method 932 can access the training component 924 to generate a global explanation 938. For example, the training component 924 can access application data 916 for which a result is known, calculate results using the machine learning model 908, and generate the global explanation 928 by comparing the calculated results with the actual results.

A user can select an explanation user interface control 936 of the machine learning application 928 to request an explanation, which can be one or both of the global explanation 928 or a local explanation 940. The local explanation 940 can be generated from a local explanation method 944 that can access the application data 916 through a consumption view 948 which can be accessed using a consumption API 952.

**Example 10 - Example Operations for Generating Machine Learning Explanations**

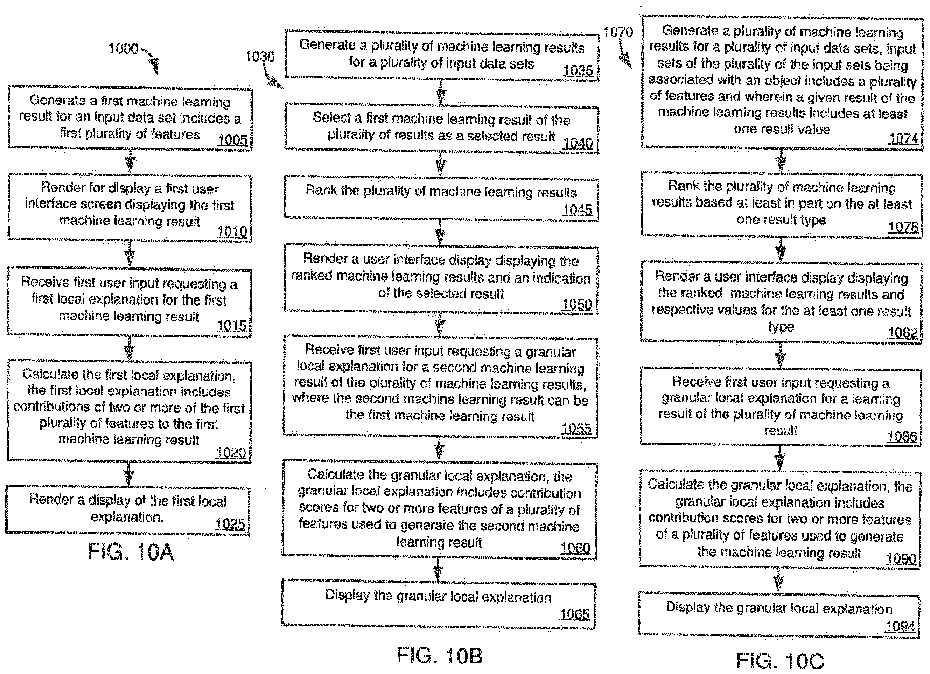

FIG. 10A is a flowchart of an example method 1000 of displaying an explanation for a machine learning result. The method 1000 can be carried out using the architecture 800 of FIG. 8 or the architecture 900 of FIG. 9, and can implement the process illustrated in FIG. 7. At 1005, a first machine learning result is generated for an input data set that includes a first plurality of features. A first user interface screen is rendered for display at 1010, displaying the first machine learning result. At 1015, first user input is received requesting a first local explanation for the first machine learning result. The first local explanation is calculated at 1020, and includes contributions of two or more of the first plurality of features to the first machine learning result. At 1025, a display is rendered of the first local explanation.

FIG. 10B is a flowchart of another example method 1030 of displaying an explanation for a machine learning result. The method 1030 can be carried out using the architecture 800 of FIG. 8 or the architecture 900 of FIG. 9, and can implement the process illustrated in FIG. 7. At 1035 a plurality of machine learning results are generated for a plurality of input data sets. A first machine learning result of the plurality of results is selected at 1040 as a selected result. At 1045, the plurality of machine learning results are ranked. A user interface display is rendered at 1050, displaying the ranked machine learning results and an indication of the selected result.

At 1055, first user input is received requesting a granular local explanation for a second machine learning result of the plurality of machine learning results, where the second machine learning result can be the first machine learning result. The granular local explanation is calculated at 1060. The granular local explanation includes contribution scores for two or more features of a plurality of features used to generate the second machine learning result. The granular local explanation is displayed at 1065.

FIG. 10C is a flowchart of a further example method 1070 of displaying an explanation for a machine learning result. The method 1070 can be carried out using the architecture 800 of FIG. 8 or the architecture 900 of FIG. 9, and can implement the process illustrated in FIG. 7. At 1074, a plurality of machine learning results are generated for a plurality of input data sets. Input data sets of the plurality of the input data sets are associated with an object comprising a plurality of features. A given machine learning result of the machine learning results includes at least one result value. The plurality of machine learning results are ranked at 1078 based at least in part on values of the at least one result type. At 1082, a user interface display is rendered that displays the ranked machine learning results and respective values for the at least one result type. First user input is received at 1086 requesting a granular local explanation for a machine learning result of the plurality of machine learning results. At 1090, the granular local explanation is calculated. The granular local explanation includes contribution scores for two or more features of a plurality of features used to generate the machine learning result. The granular local explanation is displayed at 1094.

**Example 11 - Computing Systems**

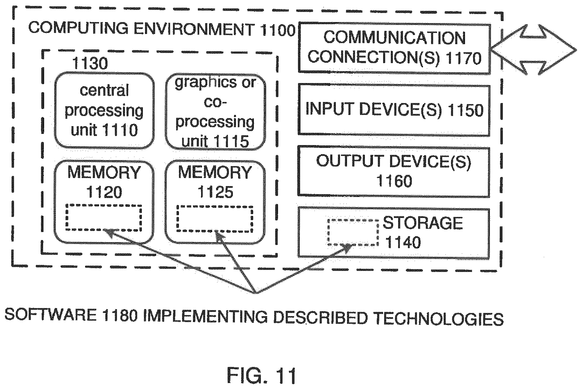

FIG. 11 depicts a generalized example of a suitable computing system 1100 in which the described innovations may be implemented. The computing system 1100 is not intended to suggest any limitation as to scope of use or functionality of the present disclosure, as the innovations may be implemented in diverse general-purpose or special-purpose computing systems.

With reference to FIG. 11, the computing system 1100 includes one or more processing units 1110, 1115 and memory 1120, 1125. In FIG. 11, this basic configuration 1130 is included within a dashed line. The processing units 1110, 1115 execute computer-executable instructions, such as for implementing the technologies described in Examples 1-10. A processing unit can be a general-purpose central processing unit (CPU), processor in an application-specific integrated circuit (ASIC), or any other type of processor. In a multiprocessing system, multiple processing units execute computer-executable instructions to increase processing power. For example, FIG. 11 shows a central processing unit 1110 as well as a graphics processing unit or co-processing unit 1115. The tangible memory 1120, 1125 may be volatile memory (e.g., registers, cache, RAM), non-volatile memory (e.g., ROM, EEPROM, flash memory, etc.), or some combination of the two, accessible by the processing unit(s) 1110, 1115, The memory 1120, 1125 stores software 1180 implementing one or more innovations described herein, in the form of computer-executable instructions suitable for execution by the processing unit(s) 1110, 1115.

A computing system 1100 may have additional features. For example, the computing system 1100 includes storage 1140, one or more input devices 1150, one or more output devices 1160, and one or more communication connections 1170. An interconnection mechanism (not shown) such as a bus, controller, or network interconnects the components of the computing system 1100. Typically, operating system software (not shown) provides an operating environment for other software executing in the computing system 1100, and coordinates activities of the components of the computing system 1100.

The tangible storage 1140 may be removable or non-removable, and includes magnetic disks, magnetic tapes or cassettes, CD-ROMs, DVDs, or any other medium which can be used to store information in a non-transitory way and which can be accessed within the computing system 1100. The storage 1140 stores instructions for the software 1180 implementing one or more innovations described herein.

The input device(s) 1150 may be a touch input device such as a keyboard, mouse, pen, or trackball, a voice input device, a scanning device, or another device that provides input to the computing system 1100. The output device(s) 1160 may be a display, printer, speaker, CD-writer, or another device that provides output from the computing system 1100.

The communication connection(s) 1170 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general purpose program, such as one or more lines of code in a larger or general purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

**Example 12 - Cloud Computing Environment**

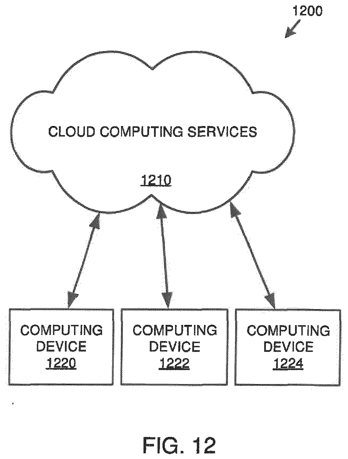

FIG. 12 depicts an example cloud computing environment 1200 in which the described technologies can be implemented. The cloud computing environment 1200 comprises cloud computing services 1210. The cloud computing services 1210 can comprise various types of cloud computing resources, such as computer servers, data storage repositories, networking resources, etc. The cloud computing services 1210 can be centrally located (e.g., provided by a data center of a business or organization) or distributed (e.g., provided by various computing resources located at different locations, such as different data centers and/or located in different cities or countries).
The cloud computing services 1210 are utilized by various types of computing devices (e.g., client computing devices), such as computing devices 1220, 1222, and 1224. For example, the computing devices (e.g., 1220, 1222, and 1224) can be computers (e.g., desktop or laptop computers), mobile devices (e.g., tablet computers or smart phones), or other types of computing devices. For example, the computing devices (e.g., 1220, 1222, and 1224) can utilize the cloud computing services 1210 to perform computing operators (e.g., data processing, data storage, and the like).

**Example 13 - Implementations**

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media, such as tangible, non-transitory computer-readable storage media, and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example, and with reference to FIG. 11, computer-readable storage media include memory 1120 and 1125, and storage 1140. The term computer-readable storage media does not include signals and carrier waves. In addition, the term computer-readable storage media does not include communication connections (e.g., 1170).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, C#, Java, Perl, JavaScript, Python, Ruby, ABAP, SQL, XCode, GO, Adobe Flash, or any other suitable programming language, or, in some examples, markup languages such as html or XML, or combinations of suitable programming languages and markup languages. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

In view of the above, the present application discloses aspects and/or embodiments as described in the following itemized list:

1. A computing system comprising:

memory;
one or more processing units coupled to the memory; and
one or more computer readable storage media storing instructions that, when loaded into the memory, cause the one or more processing units to perform operations for:

generating a first machine learning result for an input data set comprising a first plurality of features;
rendering for display a first user interface screen displaying the first machine learning result;
receiving first user input requesting a first local explanation for the first machine learning result;
calculating the first local explanation, the first local explanation comprising contributions of two or more of the first plurality of features to the first machine learning result; and
rendering a display of the first local explanation.

2. The computing system of item 1, the operations further comprising:

generating a second machine learning result from the input data set;
comparing the first machine learning result with the second machine learning result;
selecting the first machine learning result as a recommended result; and
wherein rendering the display comprises displaying the second machine learning result.

3. The computing system of any one of the preceding items, wherein the displaying the first local explanation is carried out in response to user input selecting the first machine learning result.

4. The computing system of any one of the preceding items, the operations further comprising:

receiving second user input requesting a second local explanation for the second machine learning result;
calculating the second local explanation, the second local explanation comprising contributions of two or more of the first plurality of features to the second machine learning result; and
rendering a display of the second local explanation

5. The computing system of any one of the preceding items, the operations further comprising:

generating a global explanation, the global explanation comprising one or more performance indicators for the machine learning model over a plurality of discrete results; and
generating a second user interface screen displaying the global explanation.

6. The computing system of any one of the preceding items, the operations further comprising:

generating a global explanation, the global explanation comprising one or more performance indicators for the machine learning model over a plurality of discrete results; and

displaying the global explanation on the first user interface screen.

7. The computing system of any one of the preceding items, the operations further comprising:

receiving user input requesting historical records associated with an object associated with the first machine learning result; and

displaying at least a portion of data associated with the historical records.

8. The computing system of any one of the preceding items, wherein the first local explanation comprises one or more input values of the input data set for an object associated with the first machine learning result.

9. The computing system of any one of the preceding items, wherein the first local explanation further comprises one or more aggregate input values for one or more of the first plurality of features for a plurality of objects associated with the input data set.

10. The computing system of any one of the preceding items, the first local explanation comprising a machine-generated natural language explanation of how the first local explanation was generated.

11. One or more computer-readable storage media storing computer-executable instructions for causing a computing system to perform processing comprising:

generating a plurality of machine learning results for a plurality of input data sets;

selecting a first machine learning result of the plurality of machine learning results as a selected result;

ranking the plurality of machine learning results to provide ranked machine learning results;

rendering a user interface display displaying the ranked machine learning results and an indication of the selected result;

receiving first user input requesting a granular local explanation for a second machine learning result of the plurality of machine learning results, where the second machine learning result can be the first machine learning result;

calculating the granular local explanation, the granular local explanation comprising contribution scores for two or more features of a plurality of features used to generate the second machine learning result; and

displaying the granular local explanation.

12. The one or more computer-readable storage media of item 11, the processing further comprising:

receiving user input requesting historical records associated with an object associated with the second machine learning result; and

displaying at least a portion of data associated with the historical records.

13. The one or more computer-readable storage media of any one of items 11 or 12, the granular local explanation comprising a machine-generated natural language explanation of how the granular local explanation was generated.

14. The one or more computer-readable storage media of any one of items 11-13, wherein the granular local explanation comprises one or more input values of the input data set for an object associated with the second machine learning result.

15. The one or more computer-readable storage media of any one of items 11-14, wherein the granular local explanation further comprises one or more aggregate input values for one or more of the plurality of features for a plurality of objects associated with the plurality of input data sets.

16. The one or more computer-readable storage media of any one of items 11-15, the processing further comprising: displaying scores calculated for the plurality of machine learning results in association with the ranked machine learning results.

17. The one or more computer-readable storage media of any one of items 11-16, the processing further comprising:

generating a global explanation, the global explanation comprising one or more performance indicators for the machine learning model over a plurality of discrete results; and
displaying the global explanation on the user interface display.

18. A method, implemented in a computing system comprising a memory and one or more processors, comprising:

generating a plurality of machine learning results for a plurality of input data sets, input sets of the plurality of the input data sets being associated with an object comprising a plurality of features and wherein a given result of the plurality of machine learning results comprises at least one result value;
ranking the plurality of machine learning results based at least in part on the at least one result value;
rendering a user interface display displaying the ranked machine learning results and respective values for the at least one result value;
receiving first user input requesting a granular local explanation for a machine learning result of the plurality of machine learning results;
calculating the granular local explanation, the granular local explanation comprising contribution scores for two or more features of a plurality of features used to generate the machine learning result; and
displaying the granular local explanation.

19. The method of item 18, further comprising:

receiving user input requesting historical records for an object associated with an input data set of the plurality of input data sets; and
displaying at least a portion of data associated with the historical records.

20. The method of any one of items 18 or 19, the granular local explanation comprising a machine-generated natural language explanation of how the granular local explanation was generated.

**Claims**

1. A computing system comprising:

memory;
one or more processing units coupled to the memory; and
one or more computer readable storage media storing instructions that, when loaded into the memory, cause the one or more processing units to perform operations for:

generating a first machine learning result for an input data set comprising a first plurality of features;
rendering for display a first user interface screen displaying the first machine learning result;
receiving first user input requesting a first local explanation for the first machine learning result;
calculating the first local explanation, the first local explanation comprising contributions of two or more of the first plurality of features to the first machine learning result; and
rendering a display of the first local explanation.

2. The computing system of claim 1, the operations further comprising:

generating a second machine learning result from the input data set;
comparing the first machine learning result with the second machine learning result;
selecting the first machine learning result as a recommended result; and
wherein rendering the display comprises displaying the second machine learning result.

3. The computing system of any one of the preceding claims, wherein the displaying the first local explanation is carried out in response to user input selecting the first machine learning result.

4. The computing system of claim 2, the operations further comprising:

receiving second user input requesting a second local explanation for the second machine learning result;
calculating the second local explanation, the second local explanation comprising contributions of two or more of the first plurality of features to the second machine learning result; and
rendering a display of the second local explanation

5. The computing system of any one of the preceding claims, the operations further comprising:

generating a global explanation, the global explanation comprising one or more performance indicators for the machine learning model over a plurality of discrete results; and
generating a second user interface screen displaying the global explanation.

6. The computing system of any one of the preceding claims, the operations further comprising:

generating a global explanation, the global explanation comprising one or more performance indicators for the machine learning model over a plurality of discrete results; and
displaying the global explanation on the first user interface screen.

7. The computing system of any one of the preceding claims, the operations further comprising:

receiving user input requesting historical records associated with an object associated with the first machine learning result; and
displaying at least a portion of data associated with the historical records.

8. The computing system of any one of the preceding claims, wherein the first local explanation comprises one or more input values of the input data set for an object associated with the first machine learning result, wherein preferably, the first local explanation further comprises one or more aggregate input values for one or more of the first plurality of features for a plurality of objects associated with the input data set.

9. The computing system of any one of the preceding claims, the first local explanation comprising a machine-generated natural language explanation of how the first local explanation was generated.

10. One or more computer-readable storage media storing computer-executable instructions for causing a computing system to perform processing comprising:

generating a plurality of machine learning results for a plurality of input data sets;
selecting a first machine learning result of the plurality of machine learning results as a selected result;
ranking the plurality of machine learning results to provide ranked machine learning results;
rendering a user interface display displaying the ranked machine learning results and an indication of the selected result;
receiving first user input requesting a granular local explanation for a second machine learning result of the plurality of machine learning results, where the second machine learning result can be the first machine learning result;
calculating the granular local explanation, the granular local explanation comprising contribution scores for two or more features of a plurality of features used to generate the second machine learning result; and
displaying the granular local explanation.

11. The one or more computer-readable storage media of claim 10, the processing further comprising:

receiving user input requesting historical records associated with an object associated with the second machine learning result; and
displaying at least a portion of data associated with the historical records, and/or
wherein the granular local explanation comprising a machine-generated natural language explanation of how the granular local explanation was generated.

12. The one or more computer-readable storage media of any one of claims 10 or 11, wherein the granular local explanation comprises one or more input values of the input data set for an object associated with the second machine learning result, and/or
wherein the granular local explanation further comprises one or more aggregate input values for one or more of the plurality of features for a plurality of objects associated with the plurality of input data sets.

**13.** The one or more computer-readable storage media of any one of claims 10-12, the processing further comprising:

  displaying scores calculated for the plurality of machine learning results in association with the ranked machine learning results, and/or
  the processing further comprising:

    generating a global explanation, the global explanation comprising one or more performance indicators for the machine learning model over a plurality of discrete results; and
    displaying the global explanation on the user interface display.

**14.** A method, implemented in a computing system comprising a memory and one or more processors, comprising:

  generating a plurality of machine learning results for a plurality of input data sets, input sets of the plurality of the input data sets being associated with an object comprising a plurality of features and wherein a given result of the plurality of machine learning results comprises at least one result value;
  ranking the plurality of machine learning results based at least in part on the at least one result value;
  rendering a user interface display displaying the ranked machine learning results and respective values for the at least one result value;
  receiving first user input requesting a granular local explanation for a machine learning result of the plurality of machine learning results;
  calculating the granular local explanation, the granular local explanation comprising contribution scores for two or more features of a plurality of features used to generate the machine learning result; and
  displaying the granular local explanation.

**15.** The method of claim 14, further comprising:

  receiving user input requesting historical records for an object associated with an input data set of the plurality of input data sets; and
  displaying at least a portion of data associated with the historical records, and/or
  wherein the granular local explanation comprising a machine-generated natural language explanation of how the granular local explanation was generated.

FIG. 1 (prior art)

FIG. 2 (prior art)

ML Algorithm 120

Result 130

Feature_1, Feature_2, Feature_3, Feature_4, Feature_5, Feature_6, Feature_7 (110), Feature_8, Feature_9, Feature_10, Feature_11, Feature_12, Feature_12, Feature_13, Feature_14, Feature_15, Feature_16, Feature_17, Feature_18, Feature_19, Feature_20, Feature_21 (110), Feature_..., Feature_n

140: 1.2, 0.75, 0.23, 2.1, 1.15, 0.66, 1.83, 4.2, 1.52, 2.87, 0.098, 0.42, 1.15, 1.54, 0.19, 1.82, 1.08, 0.077, 0.88, 0.008, 0.008, 0.007, ..., n

FIG. 3

FIG. 4

EP 3 843 017 A2

500

```
┌──────────────────────┐      ┌──────────────────────┐      ┌──────────────────────┐
│ Machine Leaning Results│     │  Level 1 Explanation  │     │  Level 2 Explanation  │
│         510           │      │         518           │      │         530           │
│  ┌────────────────┐   │      │ ┌──────────────────┐  │      │ ┌──────────────────┐  │
│  │  Explanation   │   │ ───▶ │ │Global Explanation│  │ ───▶ │ │Global Explanation│  │
│  │  UI Control    │   │      │ │       522        │  │      │ │       534        │  │
│  │     514        │   │      │ └──────────────────┘  │      │ └──────────────────┘  │
│  └────────────────┘   │      │  ┌─────────────────┐  │      │ ┌──────────────────┐  │
└──────────────────────┘      │  │   Explanation   │  │      │ │  High-Level Local│  │
                              │  │   UI Control    │  │      │ │   Explanation    │  │
                              │  │      526        │  │      │ │       538        │  │
                              │  └─────────────────┘  │      │ └──────────────────┘  │
                              └──────────────────────┘      │  ┌─────────────────┐  │
                                                            │  │   Explanation   │  │
                                                            │  │   UI Control    │  │
                                                            │  │      542        │  │
                                                            │  └─────────────────┘  │
                                                            └──────────────────────┘
```

Explanation
580

Global Explanation
584

High-Level Local
Explanation
538

Detailed Local
Explanation
554

Scenario Details
562

Explanation
UI Control
566

Scenario Details
562

Level 3 Explanation
546

Global Explanation
550

Detailed Local
Explanation
554

Explanation
UI Control
558

FIG. 5

EP 3 843 017 A2

| Suppliers (8) Ranked by Price, Delivery Time, and Minimum Order Quantity ★★★☆☆ | | Predictive Power: 0.6704 | Prediction Confidence: 0.9435 | | | |
|---|---|---|---|---|---|---|
| Name | Location | Score | Ranking | Delivery Time | Price Per Unit | Minimum Order Quantity |
| Supplier XYZ | Walldorf, DE | 9.1 | Best Match | 14 | 470 | 300 |
| Supplier 1A2 | St. Leon-Rot, DE | 9.0 | Good Match | 12 | 490 | 350 |
| Supplier 234 | Palo Alto, USA | 8.5 | Alternative | 14 | 490 | 400 |
| Supplier AL2 | Newtown Square, USA | 7.9 | Alternative | 15 | 480 | 350 |
| Supplier 8UT | Seoul, KR | 7.8 | Alternative | 21 | 490 | 450 |
| Supplier PL8 | Sophia, BG | 7.8 | Alternative | 21 | 500 | 500 |
| Supplier 0N4 | Levallois-Perret, FR | - | - | - | - | - |
| Supplier 71Q | Toronto, CA | - | - | - | - | - |

FIG. 6A

FIG. 6B

EP 3 843 017 A2

FIG. 6C

EP 3 843 017 A2

FIG. 6D

EP 3 843 017 A2

FIG. 7

FIG. 8

FIG. 9

**FIG. 10A**

Generate a first machine learning result for an input data set includes a first plurality of features    1005

↓

Render for display a first user interface screen displaying the first machine learning result    1010

↓

Receive first user input requesting a first local explanation for the first machine learning result    1015

↓

Calculate the first local explanation, the first local explanation includes contributions of two or more of the first plurality of features to the first machine learning result    1020

↓

Render a display of the first local explanation.    1025

---

**FIG. 10B**

Generate a plurality of machine learning results for a plurality of input data sets    1035

↓

Select a first machine learning result of the plurality of results as a selected result    1040

↓

Rank the plurality of machine learning results    1045

↓

Render a user interface display displaying the ranked machine learning results and an indication of the selected result    1050

↓

Receive first user input requesting a granular local explanation for a second machine learning result of the plurality of machine learning results, where the second machine learning result can be the first machine learning result    1055

↓

Calculate the granular local explanation, the granular local explanation includes contribution scores for two or more features of a plurality of features used to generate the second machine learning result    1060

↓

Display the granular local explanation    1065

---

**FIG. 10C**

Generate a plurality of machine learning results for a plurality of input data sets, input sets of the plurality of the input sets being associated with an object includes a plurality of features and wherein a given result of the machine learning results includes at least one result value    1074

↓

Rank the plurality of machine learning results based at least in part on the at least one result type    1078

↓

Render a user interface display displaying the ranked machine learning results and respective values for the at least one result type    1082

↓

Receive first user input requesting a granular local explanation for a learning result of the plurality of machine learning result    1086

↓

Calculate the granular local explanation, the granular local explanation includes contribution scores for two or more features of a plurality of features used to generate the machine learning result    1090

↓

Display the granular local explanation    1094

COMPUTING ENVIRONMENT 1100

**1130**

central processing unit 1110

graphics or co-processing unit 1115

MEMORY 1120

MEMORY 1125

COMMUNICATION CONNECTION(S) 1170

INPUT DEVICE(S) 1150

OUTPUT DEVICE(S) 1160

STORAGE 1140

SOFTWARE 1180 IMPLEMENTING DESCRIBED TECHNOLOGIES

FIG. 11

1200

CLOUD COMPUTING SERVICES

1210

| COMPUTING DEVICE 1220 | COMPUTING DEVICE 1222 | COMPUTING DEVICE 1224 |

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **LUNDBERG et al.** *Consistent Individualized Feature Attribution for Tree Ensembles, https://arxiv.org/abs/1802.03888*

- **RIBEIRO et al.** *Why Should I Trust You?' Explaining the Predictions of Any Classifier, https://arxiv.org/pdf/1602.04938.pdf*